Europäisches Patentamt

(19) **European Patent Office**

**Office européen des brevets**

(11) Publication number: **0 119 790**
A1

# (12) EUROPEAN PATENT APPLICATION

(21) Application number: **84301547.0**

(22) Date of filing: **08.03.84**

(51) Int. Cl.³: **G 01 F 23/22, G 01 F 23/28**

(30) Priority: **18.03.83 GB 8308129**

(43) Date of publication of application: **26.09.84**
**Bulletin 84/39**

(84) Designated Contracting States: **CH DE FR GB LI NL**

(71) Applicant: **IMPERIAL CHEMICAL INDUSTRIES PLC, Imperial Chemical House Millbank, London SW1P 3JF (GB)**

(72) Inventor: **Atkinson, Peter, 74 Wainstones Close, Great Ayton Middlesbrough Cleveland (GB)**

(74) Representative: **Martin, David Lincoln et al, Imperial Chemical Industries PLC Legal Department: Patents PO Box 6 Bessemer Road, Welwyn Garden City Herts, AL7 1HD (GB)**

(54) **Liquid level monitoring.**

(57) The level of liquid in a container, for example an upright cylinder of the kind used to store liquefied gas, is monitored by measuring the resonant frequency of the container and comparing it with a pre-determined standard. The resonant frequency is measured by applying mechanical vibrations, preferably of a frequency up to 10kHz, to the container and monitoring the resonant frequency using known methods. The results obtained are compared with the pre-determined standard, which is for example a calibration graph, to determine accurately the degree of filling of the container.

EP 0 119 790 A1

## Liquid Level Monitoring

The present invention relates to a method for monitoring the presence and certain physical properties of a fluid in a container.

Resonance is a well-known and well-documented phenonomen exhibited by most physical systems, mechanical resonance being one form of resonance which has attracted attention. The Applicants have now surprisingly found that mechanical resonance can be used to monitor the presence of a fluid in a container. In particular, we have found that mechanical resonance can be used to provide a very accurate indication of the level of a liquid in a container.

Many methods of measuring liquid levels have been proposed and some of these have been put into commercial practice. In some cases, the method proposed can be applied to only one or relatively few situations while other methods are more broadly applicable. For example, several methods have been applied to the measurement of liquid level in liquefied gas cylinders although none of them is entirely satisfactory. Knowledge of the liquid level in such cylinders is important so that the operator knows when it is necessary to change the cylinder. If he changes the cylinder too early, there may still be an appreciable amount of gas remaining in the cylinder and this, of course, is wasteful and increases costs unnecessarily. On the other hand, if the cylinder empties before it is changed, there may be adverse consequences for the reaction or other system to which the cylinder is connected.

The vapour pressure in the space above the liquid cannot be used as a measure of the liquid level. However, it might be possible to weigh the cylinder but considerable care has to be taken to ensure that any vertical support which could affect the weight measurement is eliminated.

It has been proposed to use radio-active devices to monitor liquid levels. They have been found to be generally excellent for single measurements but they are difficult or expensive to use for on-line, continuous, monitoring. Other proposed methods have involved the use of ultrasonic vibrations and detection systems associated therewith. In one such prior art method, for example, an ultrasonic pulse is transmitted through the wall of the vessel. The resultant signal reflected from the opposite wall of the vessel is detected and the extent of the attenuation of the amplitude of the initial pulse determined so as to provide an indication of whether a gas/liquid or liquid/liquid interface is above or below a predetermined level in the vessel. In another prior art method a movable source of ultrasonic pulses is used to repetitiously emit ultrasonic pulses locally at various vertical locations on the container wall. In the interval between each emitted pulse the reflected signal is measured, the position of the liquid level being indicated when the amplitude of the reflected signal falls below a predetermined minimum level.

According to one aspect of the present invention a method for determining the level of a liquid in a container comprises measuring the resonant frequency of the container and comparing the measured frequency with a pre-determined standard.

Clearly the container must be made of a material which supports the propagation of mechanical vibration and the method is particularly applicable to metal containers, especially enclosed containers and vessels used on industrial plants and in laboratories, for example cylinders and more particularly liquefied gas cylinders, such as are in widespread use in industry, in laboratories etc., and such vessels as the large pressurised tanks used to store chemical agents used in fire suppression systems, for example in process plants and on oil platforms. The pre-determined standard may comprise a calibration graph drawn up for different degrees of filling of a particular type of vessel. This graph will not necessarily be a straight line although in some cases the line may be substantially straight. However, since the operator may only be interested in knowing when the container is nearly empty, the pre-determined standard may simply comprise the resonant frequency for the empty container. The closer the measured value approaches this figure, the emptier is the container. The latter technique is particularly applicable to the situation where the same cylinder is permanently installed in a system, being refilled as necessary.

The resonant frequency can be measured in any convenient manner. Mechanical vibrations are generated from any suitable source, for example an audio-oscillator, in a fixed position adjacent the wall of the container so as to provide a continuous waveform of adjustable frequency. In preferred embodiments of the method of the invention the generated frequency is in the range up to 10 kilohertz, although the use of higher frequencies is also possible. The resultant resonant frequency of the container is detected and monitored by any suitable conventional means and then compared with the pre-determined standard to provide a measure of the level of liquid in the container. In one embodiment of the invention for determining the liquid level in an upright gas cylinder, a circumferential strap incorporating both excitation and pick-up transducers and linked to associated measuring equipment can be fitted around the outside of the cylinder. Alternatively, the resonant frequency can be monitored transversely over the whole length of the container, rather than radially. Care must be taken in these measurements not to constrain the container or subject it to extraneous influences. The applicants have surprisingly found that, contrary to expectations, the difference in resonant frequency of a full and of an empty gas cylinder is of the order of 10 to 15% rather than the much smaller change which had been expected.

According to a further aspect of the present invention a method of monitoring changes in density of a fluid maintained at constant liquid level in a container comprises measuring the resonant frequency of the container continuously or at intervals and comparing the measured frequencies with a pre-determined standard. One example of this aspect of the invention lies in the measurement of changing density of a fluid flowing along a pipeline.

The present invention is further described with reference to the accompanying drawings in which

Figure 1 is a schematic representation of a gas cylinder and associated equipment for determining resonant frequency;

Figure 2 illustrates the mode of natural vibration of the cylinder of Figure 1;

Figure 3 is a schematic representation of a strap for fitting around a liquefied gas cylinder together with associated resonant frequency measuring equipment; and

Figure 4 is a graph illustrating the typical relationship between resonant frequency and liquid level in a liquefied gas cylinder.

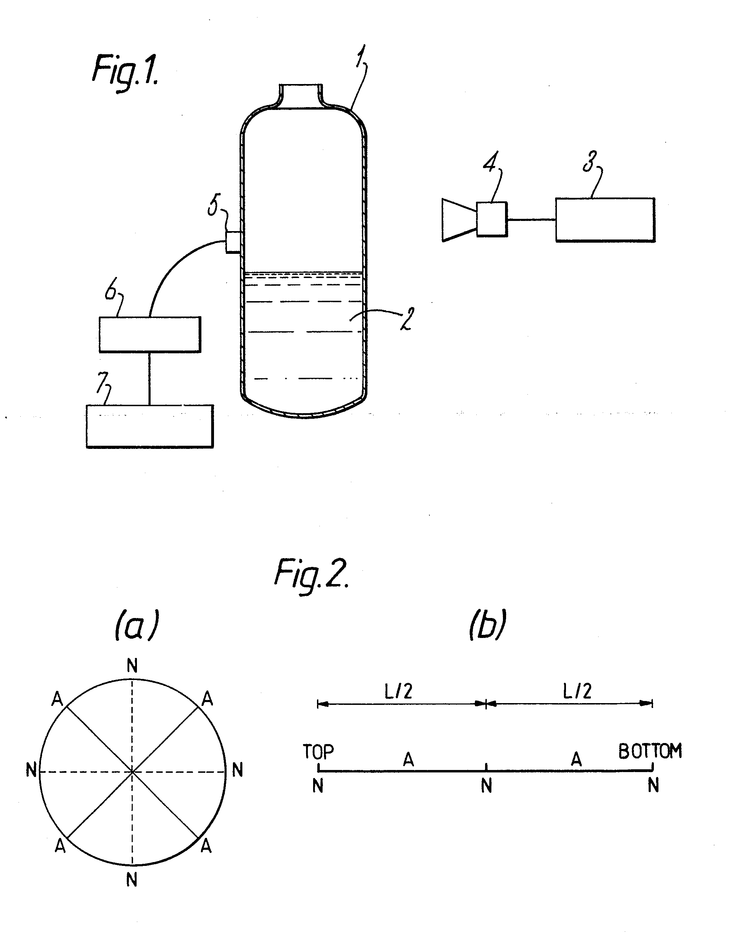

Referring to Figure 1, a liquefied gas cylinder 1 is illustrated about half-filled with liquid 2. An audio oscillator 3 and associated loudspeaker 4 are located adjacent one side of cylinder 1 while an accelerometer 5, which is connected to an amplifier 6 and oscillator 7, is fitted to the other side of the cylinder. While these pieces of equipment are shown in Figure 1 on opposite sides of cylinder 1, they can, if desired, be located on the same side.

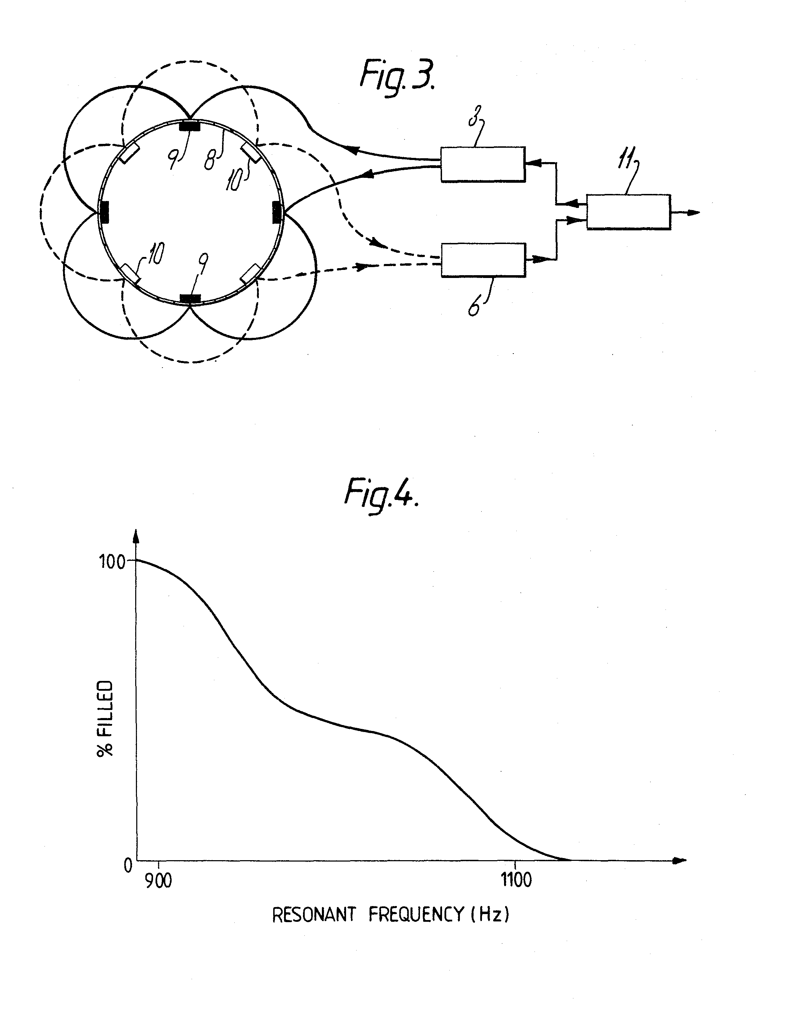

Figure 3 represents an alternative, more practically useful, arrangment in which a circumferential strap 8, adapted to be fitted around a cylinder 1, is provided with excitation transducers 9 and pick-up transducers 10 connected respectively to an audio oscillator 3 and pre-amplifier 6 which in turn are connected to a control box 11 (for illustrative purposes, connections from the oscillator 3 and pre-amplifier 6 are shown with full and broken lines respectively).

In use, the audio oscillator 3 (Figure 1) produces a continuous sinusoidal waveform of adjustable frequency. The signal drives the loudspeaker and excites the cylinder. These cylinder vibrations are picked up by the accelerometer 5 whose output is fed via amplifier 6 to the oscilloscope 7. The control box 11 (Figure 3) detects the resonant frequency and feeds-back this oscillation to the cylinder, thereby maintaining a closed-loop frequency control. A metal vessel has many natural modes of vibration. Some of these modes produce radial movements of the cylinder walls and the frequency of any such resonance is determined by such factors as the dimensions, stiffness and effective mass of the cylinder wall. If the cylinder is empty (or there is a low density gas in contact with it) then the effective wall mass is the mass of the cylinder wall itself. However, if a liquid is in contact with the wall then, as the wall vibrates, the liquid is also caused to move and the effective wall mass increases, thereby decreasing the resonant frequency. It is frequency changes caused by varying amounts of liquid which are measured by the accelerometer 5.

In the present case, a highly resonant node of natural vibration of the cylinder was identified having a nodal pattern as illustrated in Figure 2 (Figure 2(a) illustrates the cylinder cross-section and figure 2(b) the cylinder long section, the letters N and A referring to node and antinode respectively).

To obtain a calibration curve, the resonant frequency of the cylinder was monitored as it was slowly filled with tap water. The curve for resonant frequency against water level is shown in Figure 4. The non-linear characteristic of this curve is caused by the longitudinal nodal pattern shown in Figure 2(b). As the liquid level passes a node there is no change in the mass of liquid vibrated and hence no change in resonant frequency.

The method of this invention allows the liquid level in a container to be monitored accurately. Unlike prior art methods, the method of this invention provides a continuous wave of vibrations from a fixed source and these vibrations resonate the whole vessel. This means that at any particular moment the position of the liquid level can be determined whether or not it is close to the source and the pick-up transducer. Prior art techniques have used less efficient methods in which a narrow beam of pulses have been used which resonate the container only locally. These methods only enable the operator to determine whether or not there is liquid at the point concerned. The operator must cast around and must usually make several measurements before he can locate the position of the liquid level.

Claims

1.      A method for determining the level of a liquid in a container
which comprises measuring the resonant frequency of the container
and comparing the measured frequency with a pre-determined standard.

2.      A method as claimed in claim 1 wherein the method comprises
generating mechanical vibrations from a source adjacent the container,
the frequency of the generated vibrations being in the range up to
10 kilohertz, and monitoring the resonant frequency of the container.

3.      A method as claimed in claim 1 or 2 in which the resonant
frequency is monitored either radially across the container or
transversely over the length of the container.

4.      A method as claimed in any one of the preceding claims in
which the pre-determined standard is a calibration graph drawn up for
different degrees of filling of the container.

5.      A method of monitoring changes in density of a fluid
maintained at constant liquid level in a container which comprises
measuring the resonant frequency of the container continuously or
at intervals and comparing the measured frequencies with a pre-
determined standard.

**Fig.1.**

**Fig.2.**

**(a)**

**(b)**

2/2

**Fig. 3.**

**Fig.4.**

**European Patent Office**

## EUROPEAN SEARCH REPORT

Application number

| | DOCUMENTS CONSIDERED TO BE RELEVANT | | EP 84301547.0 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y | US - A - 3 075 382 (MITHIAS) <br> * Totality * | 1 | G 01 F 23/22 <br> G 01 F 23/28 |
| A | | 2,3,5 | |
| | -- | | |
| Y | SOVIET INVENTIONS ILLUSTRATED, Section EL, Week E11, April 28, 1982 <br> DERWENT PUBLICATIONS LTD, London S02 <br> pages 58,59 <br> * SU-838-382 (DNEPR CHEM-TECHN) * | 1 | |
| A | | 2,5 | |
| | -- | | |
| A | US - A - 3 324 716 (ROBERTS) <br> * Fig. 1; column 1, lines 39-60; column 4, lines 6-28 * | 1,3,5 | **TECHNICAL FIELDS SEARCHED (Int. Cl. ³)** |
| | -- | | |
| A | DE - A1 - 3 017 465 (CHEMETRON) <br> * Page 8, line 1 - last line; page 11, line 18 - page 12, line 12; page 13, line 10 - page 16, line 24; fig. 2-4 * | 1-3 | G 01 F 23/00 |
| | ---- | | |

The present search report has been drawn up for all claims

| Place of search <br> VIENNA | Date of completion of the search <br> 30-05-1984 | Examiner <br> GRONAU |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82